# EUROPEAN PATENT SPECIFICATION

(11) **EP 4 088 438 B1**
(45) Date of publication and mention of the grant of the patent: **12.11.2025**
(21) Application number: 20824597.7
(22) Date of filing: 21.12.2020
(51) Int. Cl.: H04L 9/40, H04L 9/00, H04L 9/08

(54) **PROVISION OF DIGITAL CONTENT VIA A COMMUNICATION NETWORK**
BEREITSTELLUNG VON DIGITALEM INHALT ÜBER EIN KOMMUNIKATIONSNETZWERK
FOURNITURE D'UN CONTENU NUMÉRIQUE PAR L'INTERMÉDIAIRE D'UN RÉSEAU DE COMMUNICATION

(30) Priority: 09.01.2020 EP 20150931
(43) Date of publication of application: 16.11.2022
(73) Proprietor: British Telecommunications public limited company, London E1 8EE (GB)
(72) Inventor: WILLIS, Peter, London EC4V 5BT (GB)
(74) Representative: British Telecommunications public limited company Intellectual Property Department
(86) International application number: PCT/EP2020/087512
(87) International publication number: WO 2021/140021

(56) References cited:
- AHMED REDA KACED ET AL: "Secure Intermediary Caching in Mobile Wireless Networks Using Asymmetric Cipher Sequences Based Encryption", 12 December 2007, MOBILE AD-HOC AND SENSOR NETWORKS; [LECTURE NOTES IN COMPUTER SCIENCE], SPRINGER BERLIN HEIDELBERG, BERLIN, HEIDELBERG, PAGE(S) 725 - 736, ISBN: 978-3-540-77023-7, XP019084327
- VENKATAVARA PRASAD ET AL: "Time-Based Proxy Re-Encryption for User Revocation with Reduced UAKs in Cloud Storage", INTERNATIONAL JOURNAL OF APPLIED ENGINEERING RESEARCH ISSN NUMBER, vol. 13, no. 8, 1 January 2018 (2018-01-01), pages 973 - 4562, XP055705188
- TOURANI REZA ET AL: "Security, Privacy, and Access Control in Information-Centric Networking: A Survey", IEEE COMMUNICATIONS SURVEYS & TUTORIALS, vol. 20, no. 1, 31 March 2018 (2018-03-31), pages 566 - 600, XP011678436, DOI: 10.1109/COMST.2017.2749508

## Description

### Technical Field

The present invention relates to the provision of digital content via a communication network. In particular, aspects of the present invention relate to methods and apparatus for enabling digital content such as web-page content, television and other such media content from a content provider to be provided via a communication network from intermediate digital content stores to user-devices.

### Background

Various background technologies and techniques will first be discussed.

### Content Delivery Networks (CDNs) and CDN caches

A Content Delivery Network (CDN) is a system of digital content-providing servers (or more generally, computers) generally operating under common control, the servers/computers each containing copies of items of data such as web-page content, television and other such media content, etc. that one or more Content Provider organisations may wish to be able to provide (on request) to their existing or potential clients. The CDN computers or nodes are placed at various points in a data network so as to allow clients to access and obtain data content they require from a computer/node nearby (in the network), rather than all clients needing to access a single central server of the Content Provider organisation in question.

Content Delivery Networks (CDNs) are increasingly being used by Content Provider organisations wishing to distribute their digital content to customers' devices or client devices (sometimes referred to as "eyeballs"). The client devices can be as simple as web browsers, or may involve applications such as Internet Protocol television (IPTV) client devices and set-top boxes (STBs).

The Content Provider organisation is motivated in several ways. Firstly, using a CDN removes or reduces the requirement to host content on its own servers and ensure that these servers can offer the capacity required by numerous customers. Secondly the Content Provider reduces the capacity it requires from network service providers to connect its servers. Lastly the CDN can provide better service to the customers to experience the content. In this regard the CDN provides multiple content hosting sites (known as "surrogates") nearer (topologically and/or geographically) in the network to their customers. It does this by maintaining a large number of distributed surrogates, and selecting the one that will provide the best performance (in terms of network location and/or load on the server).

### Virtual CDN

A network operator may have a small number of CDN operators (possibly ten or more, depending on the size of the network operator and/or its network, and/or the geographical size of the region in which it operates), each with their caches, or surrogates, located at several core network sites. At peak times, a significant proportion (e.g. 50%) of a network operator's broadband traffic may be sourced from these caches. If these caches could be moved closer to the edge of the network operator's network (i.e. nearer to the respective Content Providers' customers, who are generally the end-consumers of the content in question), network traffic would be reduced sufficiently to allow the network operator to make significant cost-savings. However it is unlikely that these CDN operators would wish to have to install their caches at a (possibly very) large number of "edge" sites in the network operator's network (possibly over a thousand sites), due to the large investment required, and even if they were willing to do so, some network operators may not be able to accommodate, power, cool and otherwise maintain all of the various CDN operators' (possibly separate) racks of equipment in each of those sites. The Virtual CDN ("vCDN") concept is one where the network operator in question provides the infrastructure at the edge sites, mainly computers and computer storage, which the CDN operators can use to host their own software and content. The vCDN service could be described as an "Infrastructure as a Service" ("laaS") offering tailored for CDN operators and the network operator's edge sites. The significant issue for CDN operators not using their own hardware is one of trusting the laaS provider (i.e. the network operator), especially with any cryptographic keys that have to be stored on the network operator's hardware to enable secure connectivity and control of content distribution to end-users.

### Transport Layer Security (TLS) Private Keys

Transport Layer Security (TLS) is a cryptographic protocol to provide communications security over a computer network and is the protocol behind Hypertext Transfer Protocol Secure (HTTPS) that is used to give web browsers secure access to web content. TLS provides privacy, data integrity and authentication so that a customer or other such user can be assured that their client device has connected to the right web page and that the content has not been tampered with "in-flight". Further, any confidential information (such as credit card details) entered/sent by the user is secure. The content provider may additionally authenticate the end-user and/or user's client device to ensure they are authorised to receive the content.

TLS uses a handshake with an asymmetric cipher to establish cipher settings and a session-specific shared key with which further communication is encrypted using a symmetric cipher. The server usually then provides identification in the form of a digital certificate. The certificate contains the server name, the trusted Certificate Authority (CA) that vouches for the authenticity of the certificate, and the server's public encryption key. The client device confirms the validity of the certificate before proceeding. The client device may then proceed in one of the following ways, for example:
- encrypt a random number with the server's public key and send the result to the server (which only the server should be able to decrypt with its private key). Both parties then use the random number to generate a unique session key for subsequent encryption and decryption of data during the session; or
- use Diffie-Hellman key exchange to securely generate a random and unique session key for encryption and decryption.

For a CDN, TLS requires that the private keys associated with the Content Providers, are stored on the hosting site/cache/surrogate.

### Proxy Re-Encryption (PRE)

Proxy re-encryption (PRE) schemes are cryptosystems which allow third parties (proxies) to alter a "ciphertext" which has been encrypted for one party, so that it may be decrypted by another. A "ciphertext" is the result of performing an encryption process, usually on plain (i.e. unencrypted) text, but it may be the result of performing a second or further encryption process on an already-encrypted ciphertext. PRE has many implementations and is the subject of much current research. A survey of PRE schemes entitled "Proxy Re-encryption Schemes for Secure Cloud Data and Applications: A Survey" is available online here: https://pdfs.semanticscholar.org/5b12/8db3fcdfe78f67df4ccdf1ae6c7bd8ecef6a.pdf

### Homomorphic Encryption

Homomorphic encryption is a form of encryption that allows computation on ciphertexts, generating an encrypted result which, when decrypted, matches the result of the operations as if they had been performed on the plaintext. It is used for Threshold-Based PRE, for example.

Referring to prior disclosures, a paper entitled "Improved Proxy Re-Encryption Schemes with Applications to Secure Distributed Storage" by Giuseppe Ateniese, Kevin Fu, Matthew Green & Susan Hohenberger, 1 Feb 2006, available at: http://spar.isi.jhu.edu/~mgreen/proxy.pdf , discusses an atomic proxy re-encryption application proposed in 1998 by Blaze, Bleumer and Strauss (BBS), in which a semi-trusted proxy converts a ciphertext for "Alice" (A) into a ciphertext for "Bob" (B) without seeing the underlying plaintext. Ateniese et al predicted that fast and secure re-encryption would become increasingly popular as a method for managing encrypted file systems, but noted that although efficiently computable, the wide-spread adoption of BBS re-encryption had been hindered by considerable security risks. They presented re-encryption schemes that aimed to realise a stronger notion of security and to show the usefulness of proxy re-encryption as a method of adding access control to the "Storage File System" (SFS) read-only system.

The 1998 proposal referred to is set out in "BBS Proxy Re-Encryption" (Blaze, M, Bleumer, G, & Strauss, M (1998), Divertible Protocols and Atomic Proxy Cryptography, published in: Advances in Cryptology - EUROCRYPT '98 (pages 127-144), Springer Berlin Heidelberg, available online from: http://link.springer.com/chapter/10.1007/BFb0054122
A paper entitled "Homomorphic Encryption Scheme Based on Elliptic Curve Cryptography for Privacy Protection of Cloud Computing" by Ming-Quan Hong, Peng-Yu Wang & Wen-Bo Zhao, 9 April 2016, available online at: https://ieeexplore.ieee.org/document/7502281 , discusses how "Cloud computing" is becoming a primary computing model, but notes that it is important for storage and transmission to be secured against possible attacks such as known-plain-text attack, and that ensuring data security and preserving privacy has hindered development. The paper notes that the Secure Multiparty Computation (SMC) problem has been solved using Trusted Third Party (TTP) techniques, but that use of TTPs themselves can be problematic. To protect user's privacy, encrypted outsourcing data are generally stored and processed in cloud computing by applying homomorphic encryption. The paper proposes use of an Elliptic Curve Cryptography (ECC) based homomorphic encryption scheme.

A paper entitled "Secure Intermediary Caching in Mobile Wireless Networks Using Asymmetric Cipher Sequences Based Encryption" (Ahmed Reda Kaced & Jean-Claude Moissinac, Mobile Ad-Hoc and Sensor Networks, Lecture Notes in Computer Science, vol 4864, December 2007, Springer, Berlin, Heidelberg) discusses the use of proxies in MANETs, and how content caching by intermediaries can be done when end-to-end security is required. It proposes a solution for an encryption scheme based on Asymmetric Cipher Sequence which allows intermediary nodes to cache data and convert ciphertext for one person into ciphertext for another person without revealing the secret decryption keys or the plaintext.

### Summary of the Invention

As indicated earlier, a significant proportion of the broadband traffic carried by a large network operator's network may originate from content caches installed and operated by Content Delivery Network ("CDN") operators in the core of the network operator's network. If the network operator could move these CDN caches from the core to the edge of their network, the network operator would be able to make considerable cost-savings, but a large network operator may have several CDN operators in its core who may not be willing to install their own hardware at the (generally) very large number of edge locations around the network operator's network. Further, even if they were willing to make this investment, necessary or desired resources such as space and power to accommodate their equipment may not be available at those thousand or more edge locations. A solution to that could be for the network operator to install a common infrastructure and operate it as an "Infrastructure as a Service" that the CDN operators can use, on which to install their CDN caches. In relation to this solution, however, some CDN operators have raised concerns with trusting the network operators' infrastructure to host the private keys that may need to be used to authenticate their content. A public-private key pair may be used to establish a secure connection to a (Content Provider's or CDN operator's) client's browser, and it is the public key that the browser may use to authenticate the received content as genuine. The security risk to a CDN operator of "losing" the private keys could be significant, however - a malicious third party could then do significant damage to a Content Provider's reputation and cause other significant problems by generating "fake news" sites that look real and appear to come from a known Content Provider, for example.

The invention is defined by the appended claims.

According to a first aspect of the invention, there is provided a method for enabling digital content from a content provider to be provided via a communication network from intermediate digital content stores to user-devices, the method comprising:
the content provider providing digital content encrypted using a cryptographic encryption key to an intermediate digital content store, the cryptographic encryption key being a public key of a key-pair and having an associated private key; and
in response to a request from a user-device to the content provider for said digital content:
   - negotiating a cryptographic session key between the content provider and the requesting user-device via the communication network, the cryptographic session key being a private key not shared with the intermediate digital content store, the cryptographic session key enabling encryption and decryption of data exchanged during a communication session between the content provider and the requesting user-device via the communication network;
   - the content provider generating a cryptographic re-encryption key in dependence on a cryptographic decryption key and on the private key associated with the cryptographic encryption key such that content encrypted using the cryptographic encryption key then re-encrypted using the cryptographic re-encryption key may be decrypted using the cryptographic decryption key; and
   - the content provider providing to the intermediate digital content store the cryptographic re-encryption key and indications of the requested digital content and of the user-device in respect of which the digital content has been requested, whereby to enable the encrypted digital content provided to the intermediate digital content store to be re-encrypted after receipt at the intermediate digital content store using the cryptographic re-encryption key, and whereby to enable the re-encrypted digital content to be provided by the intermediate digital content store to the requesting user-device via the communication network;
wherein the content provider provides encrypted digital content items to the intermediate digital content store prior to receiving requests from user-devices for said digital content items; andwherein the cryptographic decryption key in dependence on which the cryptographic re-encryption key is generated is the cryptographic session key that has been shared between the content provider and the requesting user-device.

Preferably the cryptographic session key is a private key shared only between the content provider and the requesting user-device.

In preferred embodiments, the intermediate digital content store is located at an edge of the communication network, at a location relatively near to the user-device and/or at a location in the communication network remote from the network core.

According to preferred embodiments, the content provider provides a particular encrypted digital content item to the intermediate digital content store in response to receiving a request from a user-device for said particular digital content item.

According to preferred embodiments, the step of sharing the cryptographic session key between the content provider and the requesting user-device is performed in response to receipt by the content provider of a request from the user-device according to a current version of a Transport Layer Security protocol.

According to preferred embodiments, the step of sharing the cryptographic session key between the content provider and the requesting user-device comprises negotiating the cryptographic session key according to a current version of a Transport Layer Security protocol.

According to preferred embodiments, the step of generating the cryptographic re-encryption key comprises generating the cryptographic re-encryption key using a cryptographic convolution of the cryptographic decryption key and the private key associated with the cryptographic encryption key.

According to preferred embodiments, the step of generating the cryptographic re-encryption key comprises generating the cryptographic re-encryption key using a homomorphic encryption function. The encryption function may use or symmetric asymmetric encryption. According to preferred embodiments, the method enables digital content from the content provider to be provided via the communication network from one or more of a plurality of intermediate digital content stores to one or more of a plurality of user-devices.

According to a second aspect of the invention, there is provided apparatus for enabling digital content from a content provider to be provided via a communication network from intermediate digital content stores to user-devices, the apparatus comprising a content provider and an intermediate digital content store, wherein:
the content provider is configured to provide digital content encrypted using a cryptographic encryption key to the intermediate digital content store, the cryptographic encryption key being a public key of a key-pair and having an associated private key;
the content provider further being configured to perform the following in response to a request from a user-device to the content provider for said digital content:
   - negotiate a cryptographic session key between itself and the requesting user-device via the communication network, the cryptographic session key being a private key not shared with the intermediate digital content store, the cryptographic session key enabling encryption and decryption of data exchanged during a communication session between the content provider and the requesting user-device via the communication network;
   - generate a cryptographic re-encryption key in dependence on a cryptographic decryption key and on the private key associated with the cryptographic encryption key such that content encrypted using the cryptographic encryption key then re-encrypted using the cryptographic re-encryption key may be decrypted using the cryptographic decryption key; and
   - provide to the intermediate digital content store the cryptographic re-encryption key and indications of the requested digital content and of the user-device in respect of which the digital content has been requested, whereby to enable the encrypted digital content provided to the intermediate digital content store to be re-encrypted after receipt at the intermediate digital content store using the cryptographic re-encryption key, and whereby to enable the re-encrypted digital content to be provided by the intermediate digital content store to the requesting user-device via the communication network;
wherein the content provider provides encrypted digital content items to the intermediate digital content store prior to receiving requests from user-devices for said digital content items; and
wherein the cryptographic decryption key in dependence on which the cryptographic re-encryption key is generated is the cryptographic session key that has previously been shared between the content provider and the requesting user-device.

The various options and preferred embodiments referred to above in relation to the first aspect are also applicable in relation to the second aspect. Preferred embodiments use proxy re-encryption with homomorphic encryption techniques to protect and authenticate a CDN operator's content when stored in caches within a network operator's infrastructure, without requiring the CDN operator to disclose their private keys to the network operator. It may be regarded as a two-step process in which the CDN operator encrypts the content with a private key which may be known only to them before sending that content to the network operator's infrastructure. When a customer connects, the CDN operator passes a session key to the customer and another key to the network operator to use to "re-encrypt" the already-encrypted content (without decrypting it) which can then only be read using the session key which is sent directly to the customer by the CDN operator (generally as part of the session initiation procedure between the CDN operator and the customer), and does not therefore need to be provided to (or even via) the network operator. It is therefore not possible for the network operator to modify the content, nor is it possible for the content to be intercepted and changed "in-flight" between the CDN operator and the customer.

The use of proxy re-encryption and homomorphic encryption for securely sharing files in cloud computing is well-documented but the use of such proxy re-encryption is not known to have been extended to CDN scenarios. Further, "re-using" a session key (which is shared anyway between the customer and the CDN operator as part of their session initiation procedure) as the "decryption key" to be used by the customer to decrypt the "encrypted then re-encrypted" content allows the technique to make use of known, standardised session-establishment procedures (e.g. the HTTPS TLS handshake procedure discussed below) to share the key that will subsequently be used as the decryption key, so avoids the need for further secure communication between the customer and the CDN operator, or for further software to be installed on the customer's device for such secure communication, while also allowing the customer and the CDN operator to authenticate each other's identities by virtue of the session key if necessary.

Two similar protocol solutions being developed in ETSI and the IETF may be used in relation to the issue of CDNs and private keys operating on third party infrastructure, as follows:
- IETF LURK: https://mailarchive.ietf.org/arch/msg/lurk/vXERS6Yr1UXwqSYC5mTnukz8DBk/4
- mcTLS - Modification to TLS to make it multi-party i.e. permit middleboxes: http://conferences.sigcomm.org/sigcomm/2015/pdf/papers/p199.pdf
mcTLS (i.e. Multi-context TLS) is now known as TLMSP (Transport Layer Middlebox Security Protocol) as standardised in ETSI-TC-CYBER group, see:
https://docbox.etsi.org/Workshop/2018/201806 ETSISECURITYWEEK/MIDDLEBOX/S03 JOI NT EFFORTS/ETSI TC CYBER MSP/ETSI TC CYBER MSP Introduction eTLS CIS RU TKOWSKI.pdf

These solutions do not encrypt the data at rest on the network operator's infrastructure (cache) and there is a degree of trust between the CDN operator and the infrastructure operator that still assumes the certificates are safely stored and used on the infrastructure. For example it would be possible for either the content to be manipulated or for the certificates to be changed in order to pass potentially-misleading content off as genuine by associating it with an apparently trustworthy certificate or content-provider (e.g. "fake news").

Another approach to solve the above problem of storing private keys may involve using secure memory enclaves. Both Intel (with "Software Guard Extensions" or SGX, which is a set of security-related instruction codes that can be built into some Intel CPUs) and ARM (with "TrustZone", which is a security approach with hardware-enforced isolation to establish secure end points and a device root of trust) are developing technology that allows a tenant (which, in the case of embodiments of the present invention, would generally be a CDN operator) to declare a piece of memory on the server an enclave that is only readable by them (or more accurately their application). An enclave cannot be read by the infrastructure owner or administrator nor any other tenant using that server. This may protect the private keys at rest on the server. However CDN operators have raised the issue of trusting the enclave implementation, on the grounds that they may not know if the network operator's server has in fact been compromised but the enclaves have been hacked and altered to look like they are working and appear uncompromised. The technology required to do this is called "Attestation" where the CDN operator could attest that the code and hardware that the network operator is using to implement enclaves has not been tampered with. However even the attestation code has to be trusted and could have been tampered with. Attestation and enclaves are thus only a partial solution dependent on the CDN operators trusting the network operator's implementation.

Some homomorphic encryption techniques currently use asymmetric encryption techniques (e.g. elliptical encryption), which require relatively high CPU power, and the cipher text is significantly larger than the clear text for symmetric encryption techniques used by standard TLS today. However either future homomorphic encryption techniques, essentially new mathematical algorithms or future hardware improvements may make homomorphic encryption techniques for proxy-re-encryption less power-intensive.

### Brief Description of the Drawings

A preferred embodiment of the present invention will now be described with reference to the appended drawings, in which:
**Figure 1** shows the primary entities involved in an embodiment of the invention;
**Figure 2** illustrates a process for implementing an embodiment of the invention; and
**Figure 3** is a block diagram of a computer system suitable for the operation of embodiments of the present invention.

### Description of Preferred Embodiments of the Invention

With reference to the accompanying figures, methods, apparatus and systems according to preferred embodiments will be described.

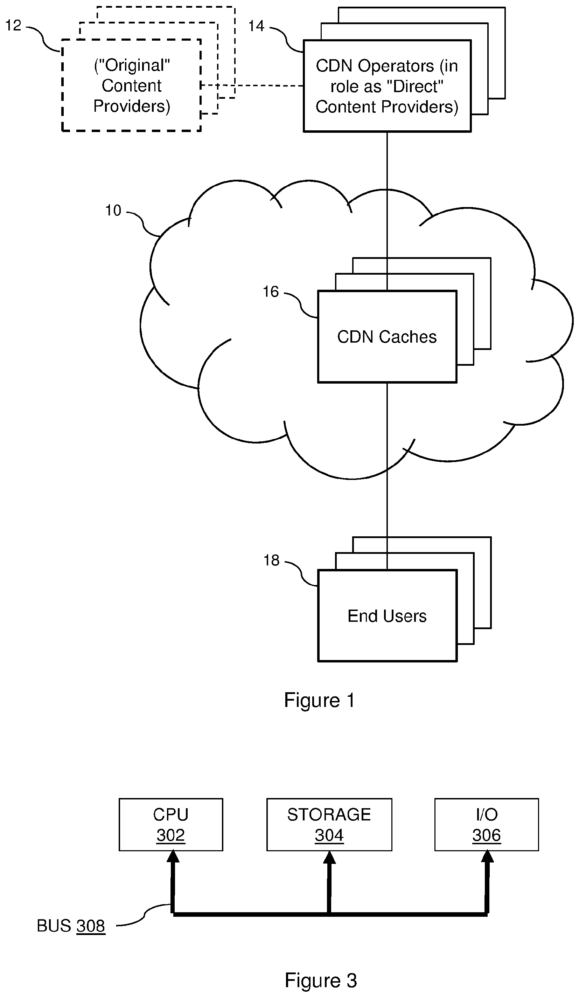

Referring to **Figure 1****,** this shows the primary entities involved in the present embodiment. These are as follows:
- One or more CDN operators 14 from which end-users will request content;
- One or more CDN caches 16 usually located in a network operator's network 10; and
- A number of end-users 18 requesting the digital content (i.e. data, generally in an encrypted form) from the CDN operators 14.

It will be noted that the content which end-users 18 may request from CDN operators 14 need not and usually will not originate from the CDN operators themselves (although it may do). There would generally be one or more "original" content providers 12 who may supply content to the CDN operators 14, but the manner in which this interaction is performed is not of particular importance to the present description as this may be performed using known techniques, so for the purposes of the present description, the CDN operators 14 will generally be regarded as the actual Content Providers since they are generally more "directly" performing the role of Content Provision in relation to the interactions to be described.

There would generally be a many-to-many relationship between all these entities, e.g. each CDN operator 14 will generally use multiple caches 16 (possibly in multiple network operators' networks 10), with multiple end-users 18, and each end-user 18 can request data from multiple CDN operators, but the present embodiment will be described primarily with reference to one CDN operator 14 acting in a role as the (direct) Content Provider in order to provide content via one CDN cache 16 to an end-user 18 who has requested that content. It is generally immaterial in the present context whether the content in question to be provided by the CDN operator 14 in question via the CDN cache 16 in question to the end-user 18 in question has in fact previously been supplied to the CDN operator 14 by an "original" content provider 12 or not, or whether the user's initial request for the content in question was conveyed directly to the "original" content provider 12 or to the CDN operator 14 acting in its role as the (direct) Content Provider.

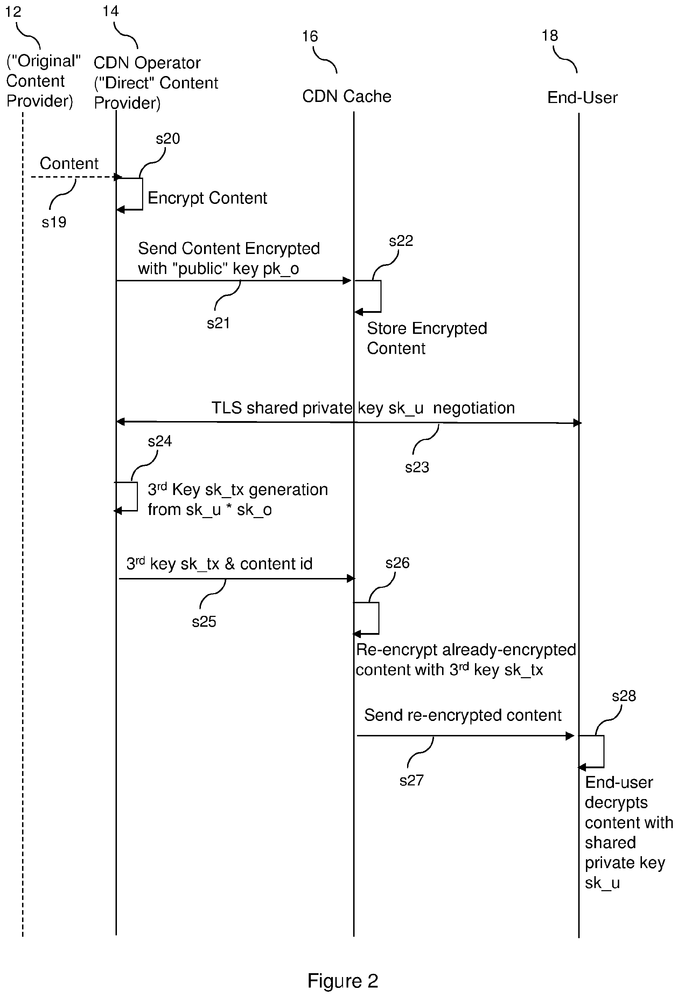

**Figure 2** illustrates a process for implementing the present embodiment. For simplicity of illustration the process shows that the encrypted content is pushed by the CDN operator to the CDN cache but the present technique is also applicable in respect of embodiments in which when an End-User 14 requests content that has not been pre-cached, this causes the CDN cache 16 to request that content from the CDN Operator 14, the CDN Operator 14 then encrypting the content in question "on-the-fly" before sending it to the CDN cache 16.

The process according to the present embodiment is as follows (on the basis that the content in question has already been supplied in this case (at a preliminary step s19) by an "original" content provider 12 to the CDN operator 14):
1. In step s20, the CDN Operator 14 encrypts the content with a "public" key pk_o. (NB The CDN Operator would generally keep this "public" key secret as it prevents third parties from generating fake content. This key is only called "public" in this instance because it is intended for asymmetric key encryption which uses public-private pairs of keys. In this case the same key generation algorithms are used to generate a private-private pair of asymmetric keys, comprising the operator's "public" key pk_o and its associated private key sk_o.)
2. In step s21, the CDN Operator 14 sends the encrypted content to the CDN cache 16. The content will be stored with a unique content identifier "content_id",
3. In step s22, the CDN cache 16 stores the encrypted content with content_id.
4. In step s23, the End-User 18 makes an HTTP request to the CDN Operator 14 (noting that the request could in some embodiments be made to the "original" content provider 12) using the TLS protocol. A TLS shared private key sk_u is negotiated for the user to use.
5. In step s24, the CDN Operator 14 generates a third secret key sk_tx from a cryptographic convolution of the operator's and user's shared private key sk_u and the operator's private key sk_o. (As above, this step could in some embodiments be performed instead by the "original" content provider 12.)
6. In step s25, the CDN Operator 14 sends third secret key sk_tx to the CDN cache 16 together with instructions to send the content with the applicable content_id to the end-user 18 in question.
7. In step s26, the CDN cache 16 re-encrypts the already once-encrypted content with the third secret key sk_tx.
8. In step s27, the CDN cache 16 sends the re-encrypted content to the End-User 18.
9. In step s28, the End-User 18 decrypts the content using the shared private key sk_u negotiated with the CDN Operator 14 in step s23 (as described in Stage 4 above). The End-User 18 is now able to access, and if appropriate, play the content.

[NB In the above example, the operation performed in step s24 (Stage 5 as set out above) in order to generate the third secret key "sk_tx" is a cryptographic convolution of the CDN operator's and the user's shared private key sk_u and the CDN operator's own private key sk_o, which is an example of a "homomorphic" encryption function as discussed earlier, but it will be appreciated that the operation to generate the third secret key "sk_tx" may involve other functions of the CDN operator's and user's shared private key sk_u and the CDN operator's private key sk_o ].

In this embodiment, the shared private key sk_u (i.e. the key shared between the CDN operator and the user) is the key shared anyway between the CDN operator (or original content provider) and the user for the purposes of the TLS handshake or other such (direct or indirect) communication between the CDN operator (or original content provider) and the user. It will be noted that this would not generally be shared with the network operator or other such intermediate entity responsible for operating the CDN cache 16. The shared private key sk_u need not be the TLS shared private key itself, but is preferably a key that would be shared anyway between the CDN operator and the user for reasons other than the generation of the third secret key sk_tx. This not only makes efficient use of computing and communication resources but avoids the need to set up an additional exchange process.

Preferred embodiments may be implemented using a variety of cryptographic algorithms, preferably homomorphic encryption algorithms such as (for example) the Elliptic Curve Cryptography algorithms from the 1998 BBS paper discussed earlier (i.e. "BBS Proxy Re-Encryption" by Blaze, Bleumer and Strauss), but other encryption algorithms may be used.

Code such as that shown below may be used in relation to implementations such as the presently-described embodiment:

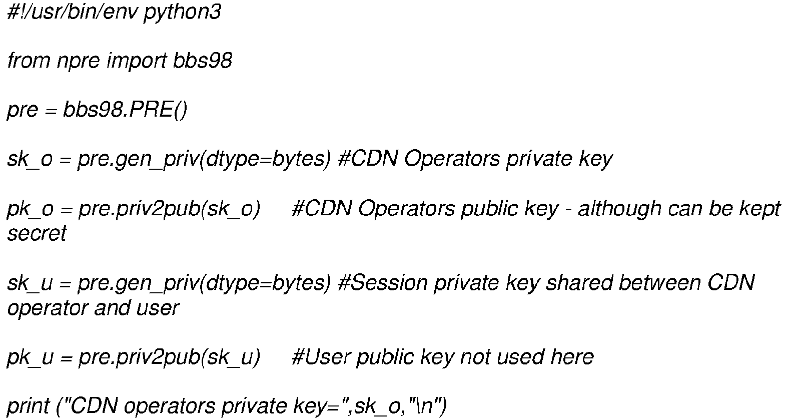

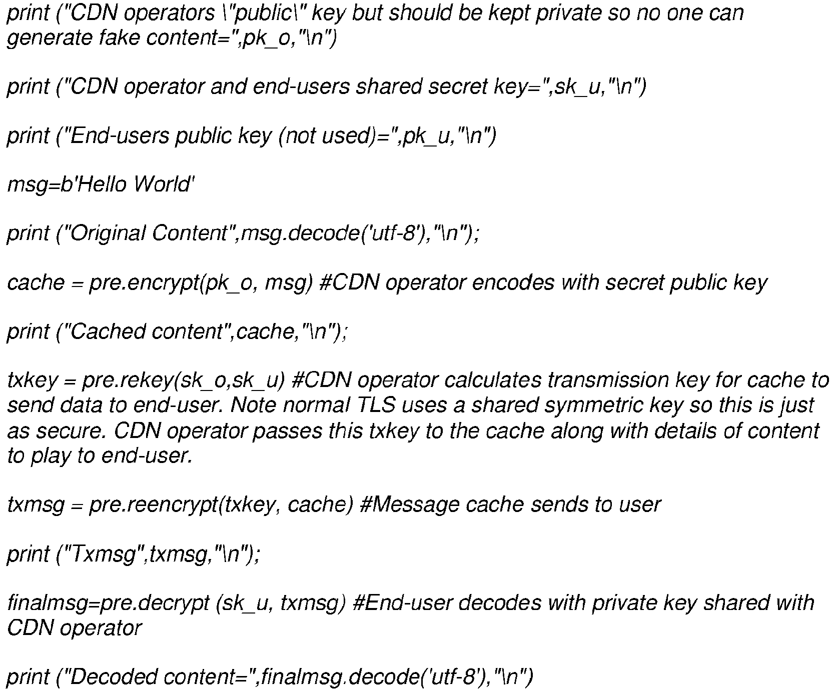

**Figure 3** is a block diagram of a computer system suitable for the operation of embodiments of the present invention. A central processor unit (CPU) 302 is communicatively connected to a data store 304 and an input/output (I/O) interface 306 via a data bus 308. The data store 304 can be any read/write storage device or combination of devices such as a random access memory (RAM) or a non-volatile storage device, and can be used for storing executable and/or non-executable data. Examples of non-volatile storage devices include disk or tape storage devices. The I/O interface 306 is an interface to devices for the input or output of data, or for both input and output of data. Examples of I/O devices connectable to I/O interface 306 include a keyboard, a mouse, a display (such as a monitor) and a network connection.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the invention may include other novel features or combinations of features disclosed herein. The applicant hereby gives notice that new claims may be formulated to such features or combinations of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method for enabling digital content from a content provider (14) to be provided via a communication network from intermediate digital content stores (16) to user-devices (18), the method comprising:
the content provider providing (S21) digital content encrypted using a cryptographic encryption key to an intermediate digital content store, the cryptographic encryption key being a public key of a key-pair and having an associated private key; and
then, in response to a request from a user-device to the content provider for said digital content:
- negotiating (S23) a cryptographic session key between the content provider and the requesting user-device via the communication network, the cryptographic session key being a private key not shared with the intermediate digital content store, the cryptographic session key enabling encryption and decryption of data exchanged during a communication session between the content provider and the requesting user-device via the communication network;
- the content provider generating (S24) a cryptographic re-encryption key from a cryptographic decryption key and from the private key associated with the cryptographic encryption key such that content encrypted using the cryptographic encryption key then re-encrypted using the cryptographic re-encryption key may be decrypted using the cryptographic decryption key; and
- the content provider providing (S25) to the intermediate digital content store the cryptographic re-encryption key and indications of the requested digital content and of the user-device in respect of which the digital content has been requested, whereby to enable the encrypted digital content provided to the intermediate digital content store to be re-encrypted (S26) after receipt at the intermediate digital content store using the cryptographic re-encryption key, and whereby to enable the re-encrypted digital content to be provided (S27) by the intermediate digital content store to the requesting user-device via the communication network;
wherein the content provider provides encrypted digital content items to the intermediate digital content store prior to receiving requests from user-devices for said digital content items; and
wherein the cryptographic decryption key from which the cryptographic re-encryption key is generated is the cryptographic session key that is negotiated between the content provider and the requesting user-device.

2. A method according to Claim 1 wherein the content provider provides a particular encrypted digital content item to the intermediate digital content store in response to receiving a request from a user-device for said particular digital content item.

3. A method according to Claim 1or 2 wherein the step of negotiating the cryptographic session key between the content provider and the requesting user-device is performed in response to receipt by the content provider of a request from the user-device according to a current version of a Transport Layer Security protocol.

4. A method according to any of the preceding claims wherein the step of negotiating the cryptographic session key between the content provider and the requesting user-device comprises negotiating the cryptographic session key according to a current version of a Transport Layer Security protocol.

5. A method according to any of the preceding claims wherein the step of generating the cryptographic re-encryption key comprises generating the cryptographic re-encryption key using a cryptographic convolution of the cryptographic decryption key and the private key associated with the cryptographic encryption key.

6. A method according to any of the preceding claims wherein the step of generating the cryptographic re-encryption key comprises generating the cryptographic re-encryption key using a homomorphic encryption function.

7. A method according to any of the preceding claims, the method enabling digital content from the content provider to be provided via the communication network from one or more of a plurality of intermediate digital content stores to one or more of a plurality of user-devices.

8. A method according to any of the preceding claims wherein the cryptographic session key is a private key shared only between the content provider and the requesting user-device.

9. Apparatus for enabling digital content from a content provider to be provided via a communication network from intermediate digital content stores to user-devices, the apparatus comprising a content provider and an intermediate digital content store, wherein:
the content provider is configured to provide digital content encrypted using a cryptographic encryption key to the intermediate digital content store, the cryptographic encryption key being a public key of a key-pair and having an associated private key;
the content provider further being configured to perform the following in response to a request from a user-device to the content provider for said digital content:
- negotiate a cryptographic session key between itself and the requesting user-device via the communication network, the cryptographic session key being a private key not shared with the intermediate digital content store, the cryptographic session key enabling encryption and decryption of data exchanged during a communication session between the content provider and the requesting user-device via the communication network;
- then generate a cryptographic re-encryption key from a cryptographic decryption key and from the private key associated with the cryptographic encryption key such that content encrypted using the cryptographic encryption key then re-encrypted using the cryptographic re-encryption key may be decrypted using the cryptographic decryption key; and
- provide to the intermediate digital content store the cryptographic re-encryption key and indications of the requested digital content and of the user-device in respect of which the digital content has been requested, whereby to enable the encrypted digital content provided to the intermediate digital content store to be re-encrypted after receipt at the intermediate digital content store using the cryptographic re-encryption key, and whereby to enable the re-encrypted digital content to be provided by the intermediate digital content store to the requesting user-device via the communication network;
wherein the content provider is configured to provide encrypted digital content items to the intermediate digital content store prior to receiving requests from user-devices for said digital content items; and
wherein the cryptographic decryption key from which the cryptographic re-encryption key is generated is the cryptographic session key that is negotiated between the content provider and the requesting user-device.

10. A computer program element comprising computer program code to, when loaded into a computer system and executed thereon, cause the computer to perform the steps of a method as claimed in any of claims 1 to 8.

## Patentansprüche

1. Verfahren zum Bereitstellen digitaler Inhalte eines Inhaltsanbieters (14) über ein Kommunikationsnetzwerk aus zwischengeschalteten digitalen Inhaltsspeichern (16) an Benutzervorrichtungen (18), umfassend:
Bereitstellen (S21) digitaler Inhalte durch den Inhaltsanbieter an einen zwischengeschalteten digitalen Inhaltsspeicher, wobei die digitalen Inhalte unter Verwendung eines kryptographischen Verschlüsselungsschlüssels verschlüsselt sind, der ein öffentlicher Schlüssel eines Schlüsselpaares ist und dem ein privater Schlüssel zugeordnet ist; und
dann, als Reaktion auf eine Anforderung einer Benutzervorrichtung an den Inhaltsanbieter bezüglich der digitalen Inhalte:
- Aushandeln (S23) eines kryptographischen Sitzungsschlüssels zwischen dem Inhaltsanbieter und der anfordernden Benutzervorrichtung über das Kommunikationsnetzwerk, wobei der kryptographische Sitzungsschlüssel ein privater Schlüssel ist, der nicht mit dem zwischengeschalteten digitalen Inhaltsspeicher geteilt wird, und wobei der kryptographische Sitzungsschlüssel die Verschlüsselung und Entschlüsselung von Daten ermöglicht, die während einer Kommunikationssitzung zwischen dem Inhaltsanbieter und der anfordernden Benutzervorrichtung über das Kommunikationsnetzwerk ausgetauscht werden;
- Erzeugen (S24) eines kryptographischen Wiederverschlüsselungsschlüssels durch den Inhaltsanbieter aus einem kryptographischen Entschlüsselungsschlüssel und aus dem dem kryptographischen Verschlüsselungsschlüssel zugeordneten privaten Schlüssel, derart, dass Inhalte, die mit dem kryptographischen Verschlüsselungsschlüssel verschlüsselt und anschließend mit dem kryptographischen Wiederverschlüsselungsschlüssel wiederverschlüsselt wurden, unter Verwendung des kryptographischen Entschlüsselungsschlüssels entschlüsselt werden können; und
- Bereitstellen (S25) des kryptographischen Wiederverschlüsselungsschlüssels durch den Inhaltsanbieter an den zwischengeschalteten digitalen Inhaltsspeicher sowie von Angaben zu den angeforderten digitalen Inhalten und zur Benutzervorrichtung, für die die digitalen Inhalte angefordert wurden, um zu ermöglichen, dass die verschlüsselten digitalen Inhalte nach Empfang im zwischengeschalteten digitalen Inhaltsspeicher unter Verwendung des kryptographischen Wiederverschlüsselungsschlüssels wiederverschlüsselt werden (S26), und um zu ermöglichen, dass die wiederverschlüsselten digitalen Inhalte (S27) vom zwischengeschalteten digitalen Inhaltsspeicher über das Kommunikationsnetzwerk an die anfordernde Benutzervorrichtung bereitgestellt werden;
wobei der Inhaltsanbieter dem zwischengeschalteten digitalen Inhaltsspeicher verschlüsselte digitale Inhalte bereitstellt, bevor Anforderungen von Benutzervorrichtungen nach den digitalen Inhalten empfangen werden; und
wobei der kryptographische Entschlüsselungsschlüssel, aus dem der kryptographische Wiederverschlüsselungsschlüssel erzeugt wird, der kryptographische Sitzungsschlüssel ist, der zwischen dem Inhaltsanbieter und der anfordernden Benutzervorrichtung ausgehandelt wird.

2. Verfahren nach Anspruch 1, wobei der Inhaltsanbieter einen bestimmten verschlüsselten digitalen Inhalt einem zwischengeschalteten digitalen Inhaltsspeicher als Reaktion auf den Empfang einer Anforderung einer Benutzervorrichtung nach dem bestimmten digitalen Inhalt bereitstellt.

3. Verfahren nach Anspruch 1 oder 2, wobei der Schritt des Aushandelns des kryptographischen Sitzungsschlüssels zwischen dem Inhaltsanbieter und der anfordernden Benutzervorrichtung als Reaktion auf den Empfang einer Anforderung der Benutzervorrichtung durch den Inhaltsanbieter gemäß einer aktuellen Version eines Transport-Layer-Security-Protokolls durchgeführt wird.

4. Verfahren nach einem der vorhergehenden Ansprüche, wobei der Schritt des Aushandelns des kryptographischen Sitzungsschlüssels zwischen dem Inhaltsanbieter und der anfordernden Benutzervorrichtung das Aushandeln des kryptographischen Sitzungsschlüssels gemäß einer aktuellen Version eines Transport-Layer-Security-Protokolls umfasst.

5. Verfahren nach einem der vorhergehenden Ansprüche, wobei der Schritt des Erzeugens des kryptographischen Wiederverschlüsselungsschlüssels das Erzeugen des kryptographischen Wiederverschlüsselungsschlüssels unter Verwendung einer kryptographischen Faltung des kryptographischen Entschlüsselungsschlüssels und des dem kryptographischen Verschlüsselungsschlüssel zugeordneten privaten Schlüssels umfasst.

6. Verfahren nach einem der vorhergehenden Ansprüche, wobei der Schritt des Erzeugens des kryptographischen Wiederverschlüsselungsschlüssels das Erzeugen des kryptographischen Wiederverschlüsselungsschlüssels unter Verwendung einer homomorphen Verschlüsselungsfunktion umfasst.

7. Verfahren nach einem der vorhergehenden Ansprüche, wobei das Verfahren ermöglicht, dass digitale Inhalte des Inhaltsanbieters über das Kommunikationsnetzwerk von einer oder mehreren einer Vielzahl von zwischengeschalteten digitalen Inhaltsspeichern an eine oder mehrere einer Vielzahl von Benutzervorrichtungen bereitgestellt werden.

8. Verfahren nach einem der vorhergehenden Ansprüche, wobei der kryptographische Sitzungsschlüssel ein privater Schlüssel ist, der ausschließlich zwischen dem Inhaltsanbieter und der anfordernden Benutzervorrichtung geteilt wird.

9. Vorrichtung zum Bereitstellen digitaler Inhalte eines Inhaltsanbieters über ein Kommunikationsnetzwerk aus zwischengeschalteten digitalen Inhaltsspeichern an Benutzervorrichtungen, umfassend einen Inhaltsanbieter und einen zwischengeschalteten digitalen Inhaltsspeicher, wobei:
der Inhaltsanbieter dazu ausgebildet ist, digitale Inhalte, die unter Verwendung eines kryptographischen Verschlüsselungsschlüssels verschlüsselt sind, an den zwischengeschalteten digitalen Inhaltsspeicher bereitzustellen, wobei der kryptographische Verschlüsselungsschlüssel ein öffentlicher Schlüssel eines Schlüsselpaares ist und dem ein privater Schlüssel zugeordnet ist;
wobei der Inhaltsanbieter ferner dazu ausgebildet ist, als Reaktion auf eine Anforderung einer Benutzervorrichtung an den Inhaltsanbieter bezüglich der digitalen Inhalte Folgendes durchzuführen:
- einen kryptographischen Sitzungsschlüssel zwischen ihm selbst und der anfordernden Benutzervorrichtung über das Kommunikationsnetzwerk auszuhandeln, wobei der kryptographische Sitzungsschlüssel ein privater Schlüssel ist, der nicht mit dem zwischengeschalteten digitalen Inhaltsspeicher geteilt wird, und wobei der kryptographische Sitzungsschlüssel die Verschlüsselung und Entschlüsselung von Daten ermöglicht, die während einer Kommunikationssitzung zwischen dem Inhaltsanbieter und der anfordernden Benutzervorrichtung über das Kommunikationsnetzwerk ausgetauscht werden;
- dann einen kryptographischen Wiederverschlüsselungsschlüssel aus einem kryptographischen Entschlüsselungsschlüssel und aus dem dem kryptographischen Verschlüsselungsschlüssel zugeordneten privaten Schlüssel derart zu erzeugen, dass Inhalte, die mit dem kryptographischen Verschlüsselungsschlüssel verschlüsselt und anschließend mit dem kryptographischen Wiederverschlüsselungsschlüssel wiederverschlüsselt wurden, unter Verwendung des kryptographischen Entschlüsselungsschlüssels entschlüsselt werden können; und
- den kryptographischen Wiederverschlüsselungsschlüssel an den zwischengeschalteten digitalen Inhaltsspeicher sowie von Angaben zu den angeforderten digitalen Inhalten und zur Benutzervorrichtung, für die die digitalen Inhalte angefordert wurden, bereitzustellen, um zu ermöglichen, dass die verschlüsselten digitalen Inhalte nach Empfang im zwischengeschalteten digitalen Inhaltsspeicher unter Verwendung des kryptographischen Wiederverschlüsselungsschlüssels wiederverschlüsselt werden, und um zu ermöglichen, dass die wiederverschlüsselten digitalen Inhalte vom zwischengeschalteten digitalen Inhaltsspeicher über das Kommunikationsnetzwerk an die anfordernde Benutzervorrichtung bereitgestellt werden;
wobei der Inhaltsanbieter dazu eingerichtet ist, dem zwischengeschalteten digitalen Inhaltsspeicher verschlüsselte digitale Inhalte bereitzustellen, bevor Anforderungen von Benutzervorrichtungen nach den digitalen Inhalten empfangen werden; und
wobei der kryptographische Entschlüsselungsschlüssel, aus dem der kryptographische Wiederverschlüsselungsschlüssel erzeugt wird, der kryptographische Sitzungsschlüssel ist, der zwischen dem Inhaltsanbieter und der anfordernden Benutzervorrichtung ausgehandelt wird.

10. Computerprogrammelement, das einen Computerprogrammcode umfasst, um, wenn er in ein Computersystem geladen und darin ausgeführt wird, das Computersystem zu veranlassen, die Schritte eines Verfahrens nach einem der Ansprüche 1 bis 8 durchzuführen.

## Revendications

1. Procédé pour permettre la fourniture d'un contenu numérique provenant d'un fournisseur de contenus (14) par l'intermédiaire d'un réseau de communication depuis des stockages intermédiaires de contenus numériques (16) vers des dispositifs utilisateur (18), le procédé comprenant les étapes suivantes :
fournir, par le fournisseur de contenus, (S21) un contenu numérique chiffré au moyen d'une clé de chiffrement cryptographique à un stockage intermédiaire de contenus numériques, la clé de chiffrement cryptographique étant une clé publique d'une paire de clés et ayant une clé privée associée ; et
puis, en réponse à une requête d'un dispositif utilisateur faite au fournisseur de contenus pour ledit contenu numérique :
- négocier (S23) une clé de session cryptographique entre le fournisseur de contenus et le dispositif utilisateur demandeur par l'intermédiaire du réseau de communication, la clé de session cryptographique étant une clé privée non partagée avec le stockage intermédiaire de contenus numériques, la clé de session cryptographique permettant le chiffrement et le déchiffrement de données échangées lors d'une session de communication entre le fournisseur de contenus et le dispositif utilisateur demandeur par l'intermédiaire du réseau de communication ;
- générer (S24), par le fournisseur de contenus, une clé de rechiffrement cryptographique à partir d'une clé cryptographique de déchiffrement et de la clé privée associée à la clé cryptographique de sorte qu'un contenu chiffré à l'aide de la clé de chiffrement cryptographique puis rechiffré à l'aide de la clé de rechiffrement cryptographique puisse être déchiffré à l'aide de la clé de déchiffrement cryptographique ; et
- fournir (S25), par le fournisseur de contenus, au stockage intermédiaire de contenus numériques, la clé de rechiffrement cryptographique et des indications du contenu numérique demandé et du dispositif utilisateur pour lequel le contenu numérique a été demandé, ce par quoi permettre le rechiffrement (S26) du contenu numérique chiffré fourni au stockage intermédiaire de contenus numériques après réception au stockage de contenus numériques à l'aide de la clé de rechiffrement cryptographique, et ce par quoi permettre la fourniture (S27) du contenu numérique rechiffré, par le stockage de contenus numériques intermédiaire, au dispositif utilisateur demandeur par l'intermédiaire du réseau de communication ;
où le fournisseur de contenus fournit des contenus numériques chiffrés au stockage de contenus numériques intermédiaire avant de recevoir des demandes provenant de dispositifs utilisateurs pour lesdits contenus numériques ; et
où la clé de déchiffrement cryptographique à partir de laquelle la clé de rechiffrement cryptographique est générée est la clé de session cryptographique négociée entre le fournisseur de contenus et le dispositif utilisateur demandeur.

2. Procédé selon la revendication 1, dans lequel le fournisseur de contenus fournit un contenu numérique chiffré particulier au stockage intermédiaire de contenus numériques en réponse à la réception d'une demande provenant d'un dispositif utilisateur pour ledit contenu numérique particulier.

3. Procédé selon la revendication 1 ou la revendication 2, dans lequel l'étape de négociation de la clé de session cryptographique entre le fournisseur de contenus et le dispositif utilisateur demandeur est exécutée en réponse à la réception, par le fournisseur de contenus, d'une demande provenant du dispositif utilisateur conformément à une version courante d'un protocole de sécurité de couche de transport.

4. Procédé selon l'une quelconque des revendications précédentes, dans lequel l'étape de négociation de la clé de session cryptographique entre le fournisseur de contenus et le dispositif utilisateur demandeur comprend la négociation de la clé de session cryptographique selon une version courante d'un protocole de sécurité de couche de transport.

5. Procédé selon l'une quelconque des revendications précédentes, dans lequel l'étape de génération de la clé de rechiffrement cryptographique comprend la génération de la clé de rechiffrement cryptographique en utilisant une convolution cryptographique de la clé de déchiffrement cryptographique et de la clé privée associée à la clé de chiffrement cryptographique.

6. Procédé selon l'une quelconque des revendications précédentes, dans lequel l'étape de génération de la clé de rechiffrement cryptographique comprend la génération de la clé de rechiffrement cryptographique en utilisant une fonction de chiffrement homomorphe.

7. Procédé selon l'une quelconque des revendications précédentes, le procédé permettant à un contenu numérique provenant du fournisseur de contenus d'être fourni par l'intermédiaire du réseau de communication à partir d'un ou plusieurs stockages intermédiaires de contenus numériques d'une pluralité de stockages intermédiaires de contenus numériques vers un ou plusieurs dispositifs d'une pluralité de dispositifs utilisateurs.

8. Procédé selon l'une quelconque des revendications précédentes, dans lequel la clé de session cryptographique est une clé privée partagée uniquement entre le fournisseur de contenus et le dispositif utilisateur demandeur.

9. Appareil permettant de fournir un contenu numérique provenant d'un fournisseur de contenus par l'intermédiaire d'un réseau de communication à partir de stockages intermédiaires de contenus numériques vers des dispositifs utilisateurs, l'appareil comprenant un fournisseur de contenus et un stockage intermédiaire de contenus numériques, où :
le fournisseur de contenus est configuré pour fournir un contenu numérique chiffré au moyen d'une clé de chiffrement cryptographique au stockage intermédiaire de contenus numériques, la clé de chiffrement cryptographique étant une clé publique d'une paire de clés et ayant une clé privée associée ;
le fournisseur de contenus étant en outre configuré pour effectuer ce qui suit en réponse à une demande d'un dispositif utilisateur au fournisseur de contenus pour ledit contenu numérique :
- négocier une clé de session cryptographique entre lui-même et le dispositif utilisateur demandeur par l'intermédiaire du réseau de communication, la clé de session cryptographique étant une clé privée non partagée avec le stockage intermédiaire de contenus numériques, la clé de session cryptographique permettant le chiffrement et le déchiffrement de données échangées lors d'une session de communication entre le fournisseur de contenus et le dispositif utilisateur demandeur par l'intermédiaire du réseau de communication ;
- générer ensuite une clé de rechiffrement cryptographique à partir d'une clé cryptographique de déchiffrement et de la clé privée associée à la clé cryptographique de sorte qu'un contenu chiffré à l'aide de la clé de chiffrement cryptographique puis rechiffré à l'aide de la clé de rechiffrement cryptographique puisse être déchiffré à l'aide de la clé de déchiffrement cryptographique ; et
- fournir, au stockage intermédiaire de contenus numériques, la clé de rechiffrement cryptographique et des indications du contenu numérique demandé et du dispositif utilisateur pour lequel le contenu numérique a été demandé, ce par quoi permettre le rechiffrement du contenu numérique chiffré fourni au stockage de contenus numériques intermédiaire après réception au stockage de contenus numériques intermédiaire à l'aide de la clé de rechiffrement cryptographique, et ce par quoi permettre la fourniture du contenu numérique rechiffré, par le stockage de contenus numériques intermédiaire, au dispositif utilisateur demandeur par l'intermédiaire du réseau de communication ;
où le fournisseur de contenus est configuré pour fournir des contenus numériques chiffrés au magasin de contenus numériques intermédiaire avant de recevoir des demandes provenant de dispositifs utilisateurs pour lesdits contenus numériques ; et
où la clé de déchiffrement cryptographique à partir de laquelle la clé de rechiffrement cryptographique est générée est la clé de session cryptographique négociée entre le fournisseur de contenus et le dispositif utilisateur demandeur.

10. Élément de programme informatique comprenant un code de programme informatique destiné, lorsqu'il est chargé dans un système informatique et exécuté sur celui-ci, à amener l'ordinateur à exécuter les étapes d'un procédé selon l'une quelconque des revendications 1 à 8.
